Europäisches Patentamt

European Patent Office

Office européen des brevets

(11) Publication number: **0 187 166**
**B1**

(12) **EUROPEAN PATENT SPECIFICATION**

(45) Date of publication of patent specification: **19.11.87**

(21) Application number: **84115438.8**

(22) Date of filing: **14.12.84**

(51) Int. Cl.⁴: **A 47 J 37/04, A 22 C 17/00**

(54) **Meat treatment.**

(43) Date of publication of application:
**16.07.86 Bulletin 86/29**

(45) Publication of the grant of the patent:
**19.11.87 Bulletin 87/47**

(84) Designated Contracting States:
**AT BE CH DE FR IT LI LU NL SE**

(56) References cited:
**EP-A-0 105 056**
**FR-A-2 196 756**
**US-A-2 243 492**
**US-A-2 810 155**
**US-A-3 222 713**
**US-A-4 026 201**

(73) Proprietor: **FRISCO-FINDUS AG**
**CH-9400 Rorschach (CH)**

(72) Inventor: **Ganrot, Bertil**
**Irisgatan 18**
**S-267 00 Bjuv (SE)**
Inventor: **Jönsson, Kurt**
**Konvaljegatan 3**
**S-267 00 Bjuv (SE)**

Courier Press, Leamington Spa, England.

## Description

The present invention relates to a method of treating meat, more particularly to a method of marking meat to impart a grilled appearance thereto and to a machine for marking meat to impart a grilled appearance thereto.

Several methods are known for marking meat to impart a grilled appearance thereto. For example, a system currently available comprises a rotating cylinder having, projecting from its outer surface, longitudinally arranged elongated iron bars which are heated by a gas flame to a high temperature and which contact the meat as it is transported on a belt below (see US—A—4026201). However, a disadvantage of this system is that the contact time is very short and the temperature necessarily has to be extremely high, for example, from 700°C to 1000°C: such temperatures not only produce an undesirable burnt meat taste but recent research has shown that carcinogenic substances can be formed when subjecting meat to temperatures high enough to burn it. Another disadvantage is that gas heating is very difficult to control and the iron bars easily become overheated. Other methods are described in United States Patent Nos. 4089260 and 4121509 where grill marks are formed on meat patties by means of jets of hot air issuing from nozzles which impinge on the patties as they are transported on a conveyor. However, the use of jets of hot air gives rise to a rather diffused mark that is not at all like the genuine grilled appearance.

We have now developed a method where a conveyor belt transports the meat and, above the meat, a branding element at a temperature of from 200°C to 550°C travels in contact with the meat. The branding element is heated with an infra-red radiator and since there is a longer contact time between the branding element and the meat, the temperature of the branding element can be much lower. In addition, since infrared heating gives a lower heat transfer rate, it is easier to control than gas flames and the branding element never becomes overheated.

Accordingly, the present invention provides a process for marking meat to impart a grilled appearance thereto wherein the meat is transported on a conveyor belt characterised in that a branding element heated to a temperature of from 200°C to 550°C by infrared radiation travels in contact with the upper surface of the meat for a period of time of from 3 minutes to 3 seconds.

The branding element may conveniently consist of one or more suitable metal bars, preferably made of iron or an alloy consisting mainly of iron, advantageously having a square cross-section, or it may be a coarse wire mesh with a plated surface. Advantageously the branding element is transported by means of an upper conveyor belt travelling above, and substantially at the same speed as the conveyor belt transporting the meat so that the lower run of the upper conveyor belt travels in the same direction as the upper run of the lower conveyor belt. When the branding element is in the form of a wire mesh, the upper conveyor belt may itself be a wire mesh endless belt. When the branding element consists of one or more metal bars, the bars are preferably fitted to the conveyor belt transversely to the direction of travel and the conveyor belt is conveniently an endless chain belt.

The branding element is conveniently heated to a temperature from 300°C to 500°C, preferably from 400°C to 490°C and especially from 425°C to 475°C.

The infrared radiation is preferably medium or long wave having a wavelength in the range of from 1 μm to 10 μm, and especially having a wavelength from 2 μm to 8 μm. The infrared radiation is conveniently provided by an infrared radiator.

The time of contact of the branding element with the meat is broadly inversely proportional to the temperature in order to obtain satisfactory grill marks. For example at 200°C, the time of contact may conveniently be from 2 to 3 minutes while at 550°C the time of contact may conveniently be from 3 to 5 seconds. The time of contact may conveniently be from 25 to 35 seconds at 300°C, from 20 to 25 seconds at 400°C, and from 4 to 10 seconds at 500°C. Within the preferred temperature range of from 425°C to 475°C, the time of contact is preferably from 20 to 12 seconds. The colour of the grill marks may easily be regulated from pale to very dark, as desired, by increasing the contact time and/or the temperature of the branding element.

The branding element may impart a grilled appearance of any desired configuration. For example, stripes may be formed when the branding element consists of metal bars travelling with the meat. Squares may be formed by forming stripes on the meat and then passing the meat under the metal bars a second time but turned at an angle of 90° on the conveyor belt, or by using a wire mesh as the heating element. The branding is one-sided and double-sided branding may be achieved simply by turning the product over and treating again in a similar manner.

The process of the present invention is applicable to any kind of meat on which it is desired to impart a grilled appearance, for example, hamburgers, beefburgers, meat patties, pork chops, beef cuts or other minced meat products having a well-defined thickness. The product with the grill marks may afterwards be deep-frozen.

The present invention also provides a machine for marking meat to impart a grilled appearance thereto comprising a conveyor belt for transporting the meat characterised in that means are provided for transporting a branding element at a temperature from 200°C to 550°C above and in contact with the meat for a period of time from 3 minutes to 3 seconds and means are provided for heating the branding element to a temperature of from 200°C to 550°C by infrared radiation.

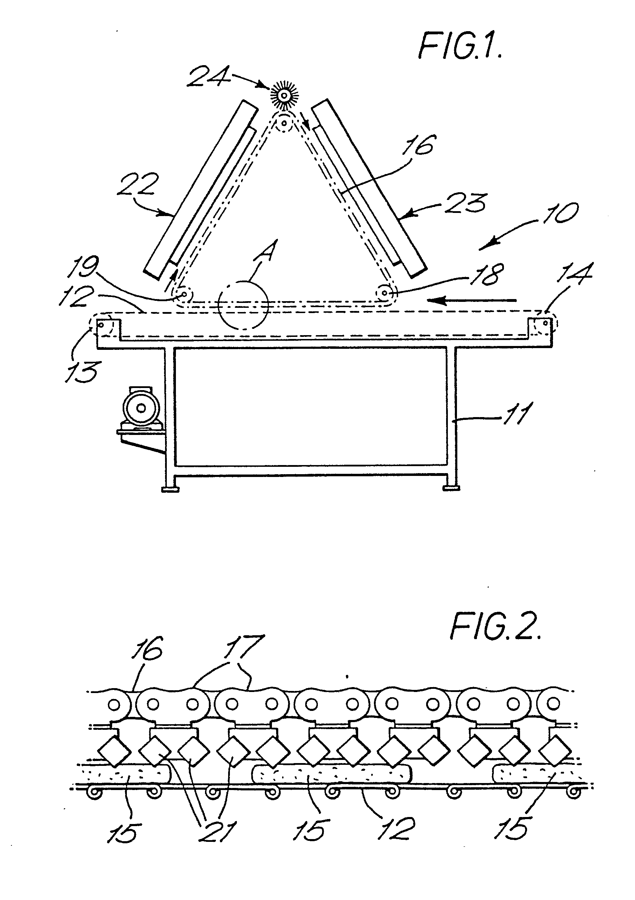

The present invention will now be described by way of Example with reference to the accompanying drawing in which Figure 1 represents a diagrammatic side view of a machine for carrying out the process of the invention and Figure 2 depicts a more detailed view of the area enclosed by circle A in Figure 1 to show the upper and lower conveyor with the product between them.

In the drawings, the machine generally designated 10, comprises a base 11, on which runs an endless wire link conveyor belt 12 trained about rollers 13, 14. On the upper run of conveyor belt 12, raw hamburgers 15 are transported in the direction of the arrow in Figure 1. Above the conveyor belt 12 are two endless chains 16 (only one shown) with links 17 trained about rollers 18, 19, 20 so that in side view each chain has a triangular outline. Fitted to the chains 16 are a large number of mild steel bars 21 positioned transversely to the direction of travel. Two infrared cassettes 22, 23 are positioned to heat the mild steel bars 21 and a rotating brush 24 is positioned to keep the steel bars clean. When heated, the mild steel bars 21 act as branding elements. Both the brush 24 and the two conveyors are driven by a variable speed gear drive.

In operation the mild steel bars 21 are heated to 450°C by the infrared cassettes 22, 23 as they travel in the direction shown by the arrows. Hamburgers 15 are fed on to the upper run of the conveyor belt 12 and travel beneath and in contact with the heated steel bars 21. The time of contact is 15 seconds after which the hamburgers have a very clear desirable striped grilled appearance. After travelling through the machine, the striped hamburgers are passed through a second time but at an angle of 90° to the original with the same face beneath and in contact with the steel bars heated by the infrared cassettes to 450°C, the time of contact again being 15 seconds. The hamburgers now have a very clear and desirable grilled appearance in the form of squares. The branded hamburgers are substantially raw with a coagulated surface and a grilled appearance.

The width of the grill stripes can be varied and controlled by adjustment of the product thickness distance. A shorter distance gives a higher contact pressure and wider grill stripes owing to the shape of the steel bars.

## Claims

1. A process for marking meat to impart a grilled appearance thereto wherein the meat is transported on a conveyor belt characterised in that a branding element heated to a temperature of from 200°C to 550°C by infrared radiation travels in contact with the upper surface of the meat for a period of time of from 3 minutes to 3 seconds.

2. A process according to claim 1 characterised in that the branding element comprises one or more iron bars positioned transversely to the direction of travel.

3. A process according to claim 1 characterised in that the branding element is transported by means of a conveyor belt.

4. A process according to claim 3 characterised in that when the branding element consists of one or more iron bars, the conveyor belt is an endless chain belt.

5. A process according to claim 1 characterised in that the branding element is heated to a temperature from 400°C to 500°C and the time of contact with the meat is from 25 seconds to 4 seconds.

6. A process according to claim 1 characterised in that the branding element is heated to a temperature from 425°C to 475°C and the time of contact with the meat is from 20 to 12 seconds.

7. A process according to claim 1 characterised in that the infrared radiation is long wave radiation having a wavelength in the range of from 1 µm to 10 µm.

8. A machine for marking meat to impart a grilled appearance thereto comprising a conveyor belt for transporting the meat characterised in that means are provided for transporting a branding element at a temperature from 200°C to 550°C above and in contact with the meat for a period of time from 3 minutes to 3 seconds and means are provided for heating the branding element to a temperature of from 200°C to 550°C by infrared radiation.

## Patentansprüche

1. Verfahren zum Prägen von Fleisch, um diesem ein gegrilltes Aussehen zu verleihen, bei welchem das Fleisch auf einem Förderband transportiert wird, dadurch gekennzeichnet, daß ein Brennelement, welches durch Infrarotstrahlung auf eine Temperatur von 200°C bis 550°C erhitzt wird, während einer von 3 min bis 3 sec betragenden Zeitspanne in Berührung mit der Oberseite des Fleisches wandert.

2. Verfahren nach Anspruch 1, dadurch gekennzeichnet, daß das Brennelement eine oder mehrere Eisenstangen aufweist, die quer zur Förderrichtung angeordnet sind.

3. Verfahren nach Anspruch 1, dadurch gekennzeichnet, daß das Brennelement mittels eines Förderers transportiert wird.

4. Verfahren nach Anspruch 3, dadurch gekennzeichnet, daß bei einem Brennelement, das aus einer oder mehreren Eisenstangen besteht, der Förderer ein endloser Kettenförderer ist.

5. Verfahren nach Anspruch 1, dadurch gekennzeichnet, daß das Brennelement auf eine Temperatur von 400°C bis 500°C erhitzt wird und daß die Kontaktzeit mit dem Fleisch zwischen 25 und 4 sec beträgt.

6. Verfahren nach Anspruch 1, dadurch gekennzeichnet, daß das Brennelement auf eine Temperatur von 425°C bis 475°C erhitzt wird und die Kontaktzeit zwischen 20 und 12 sec beträgt.

7. Verfahren nach Anspruch 1, dadurch gekennzeichnet, daß die Infrarotstrahlung eine langwellige Strahlung ist, in einem Wellenlängenbereich von 1 µm bis 10 µm.

8. Maschine zum Prägen von Fleisch, um diesem ein gegrilltes Aussehen zu verleihen, mit einem Förderband zum Transportieren des Fleisches, dadurch gekennzeichnet, daß Mittel zum Transportieren eines Brennelementes auf einer Temperatur von 200°C bis 550°C und in Berührung mit dem Fleisch während einer Zeitspanne von 3 min bis 3 sec sowie Mittel zum Erhitzen des Brennelementes auf eine auf eine Temperatur von 200°C bis 550°C durch Infrarotstrahlung vorgesehen sind.

**Revendications**

1. Procédé pour marquer de la viande afin de lui donner un aspect grillé, dans lequel la viande est avancée sur une bande transporteuse, caractérisé en ce qu'un élément à marquer, chauffé à une température de 200°C à 550°C par un rayonnement infrarouge, se déplace en contact avec la surface supérieure de la viande pendant une période de temps de 3 minutes à 3 secondes.

2. Procédé selon la revendication 1, caractérisé en ce que l'élément à marquer comprend une ou plusieurs barres de fer disposées transversalement à la direction d'avance.

3. Procédé selon la revendication 1, caractérisé en ce que l'élément à marquer est avancé au moyen d'une bande transporteuse.

4. Procédé selon la revendication 3, caractérisé en ce que, lorsque l'élément à marquer est constitué d'une ou de plusieurs barres de fer, la bande transporteuse est une bande à chaînes sans fin.

5. Procédé selon la revendication 1, caractérisé en ce que l'élément à marquer est chauffé à une température de 400°C à 500°C et le temps de contact avec la viande est de 25 secondes à 4 secondes.

6. Procédé selon la revendication 1, caractérisé en ce que l'élément à marquer est chauffé à une température de 425°C à 475°C et le temps de contact avec la viande est de 20 à 12 secondes.

7. Procédé selon la revendication 1, caractérisé en ce que le rayonnement infrarouge est un rayonnement à ondes longues ayant une longueur d'onde dans la gamme de 1 μm à 10 μm.

8. Machine pour marquer la viande afin de lui donner un aspect grillé, comprenant une bande transporteuse destinée à faire avancer la viande, caractérisée en ce que des moyens sont prévus pour faire avancer un èlément à marquer à une température de 200°C à 550°C au-dessus de et en contact avec la viande pendant une période de temps de 3 minutes à 3 secondes, et des moyens sont prévus pour chauffer l'élément à marquer à une température de 200°C à 550°C pr rayonnement infrarouge.

*FIG.1.*

24

22

16

23

10

19

12

A

18

14

13

11

*FIG.2.*

16

17

15

21

15

12

15